# FASCICULE DE BREVET EUROPEEN

(11) **EP 2 214 918 B1**
(45) Date de publication et mention de la délivrance du brevet: **18.05.2011**
(21) Numéro de dépôt: 08843050.9
(22) Date de dépôt: 21.10.2008
(51) Int. Cl.: B60C 11/14, B60C 19/00

(54) **BANDE DE ROULEMENT AYANT DES RAINURES POURVUES D'UN DISPOSITIF ANTI BRUIT**
PROFILBAND MIT NUTEN MIT EINER GERÄUSCHREDUZIERUNGSVORRICHTUNG
TREAD BAND WITH GROOVES PROVIDED WITH A NOISE-REDUCING DEVICE

(30) Priorité: 24.10.2007 FR 0758544
(43) Date de publication de la demande: 11.08.2010
(73) Titulaire: Société de Technologie MICHELIN, 63000 Clermont-Ferrand (FR); MICHELIN Recherche et Technique S.A., 1763 Granges-Paccot (CH)
(72) Inventeur: IGARASHI, Masashi, Gunma 373-8668 (JP); MAESAKA, Masayuki, Gunma 373-8668 (JP); GREVERIE, Ludovic, Gunma 373-8668 (JP); PAGANO, Salvatore, Gunma 0373-0828 (JP)
(74) Mandataire: Diernaz, Christian
(86) Numéro de dépôt international: PCT/EP2008/064197
(87) Numéro de publication internationale: WO 2009/053353

(56) Documents cités:
- WO-A-97/18960
- FR-A- 2 348 068
- JP-A- 11 048 718
- JP-A- 63 291 709
- US-A1- 2005 092 414
- US-B1- 6 343 843

## Description

L'invention concerne les pneus et en particulier les dispositifs permettant de réduire le bruit des pneus en roulage.

Afin de réduire les bruites en roulage dû à la présence de rainures sur la bande de roulement d'un pneu et à la formation de résonances sonores résultant de la circulation de l'air dans ces rainures, il est connu de pourvoir les parois délimitant lesdites rainures avec des poils ou excroissances. Ces poils ou excroissances, tout en empêchant la création de résonance sonore, laissent le passage à l'eau afin de permettre un roulage sécurisé par temps de pluie et sur route recouverte d'eau (on peut citer notamment les documents publiés sous les références JP11-91319-A et EP0691224-A2). Le document JP-A-110408718 décrit les caractéristiques techniques du préambule de la revendication 1.

Toutefois, il a été constaté qu'il était très souvent impossible d'obtenir une structure comprenant une pluralité de poils selon une densité volumique de remplissage élevée en poils afin d'améliorer la réduction du bruit de résonance de manière significative. Par ailleurs, il est nécessaire d'avoir des longueurs appropriées de poils pour remplir de manière satisfaisante les rainures, ce qui rend difficile l'implantation de poils de grande longueur.

Un objectif de la présente invention est de fournir une solution à ce problème, c'est-à-dire à proposer une bande de roulement ayant des cavités ouvertes sur la surface de roulement de cette bande et pourvues de poils avec des densités de remplissage de la cavité très supérieures aux densités usuelles.

Pour ce faire, il est proposé une bande de roulement ayant une surface de roulement sur laquelle débouche au moins une cavité (comme par exemple une rainure), cette cavité étant limitée par une paroi de cavité comprenant une paroi de fond prolongée par au moins une paroi latérale coupant la surface de roulement pour former au moins une arête, cette bande étant, sur au moins une partie de la paroi de cavité, pourvue d'une pluralité de poils porteurs, chaque poil porteur comprenant deux extrémités, l'une au moins étant fixée à la paroi de cavité, cette bande étant caractérisée en ce qu'une pluralité de poils porteurs comprennent chacun au moins une ramification formée par la fixation d'au moins une fibre ou poil de ramification.

Dans une variante de bande de roulement selon l'invention, les poils porteurs fixés à la paroi de cavité sont uniquement fixés à la paroi de fond de la cavité à l'exclusion des parois latérales.

Préférentiellement les poils porteurs sont choisis dans le groupe constitué par les fibres de nylon, PET, acrylique, coton, lin, laine et rayonne.

. Les poils porteurs présentent une longueur comprise entre 0.3 et 5 mm et un diamètre au moins égal à 20 microns (µ) et au plus à 80 microns (µ).

En outre, les poils de ramification sont choisis dans le groupe constitué par des fibres de type suivant : nylon, PET, acrylique, coton, lin, laine et rayonne. Les poils de ramification présentent une longueur comprise entre 0.2 et 3.2mm et un diamètre au moins égal à 20 microns (µ) et au plus à 80 microns (µ).

Préférentiellement, la bande de roulement selon l'invention comprend une densité de poils porteurs qui est au moins égale à 2 et au plus égale à 50 poils par unité de surface exprimée en mm² (millimètre au carré).

De façon pratique, la mise en place des poils porteurs dans les cavités d'une bande de roulement est faite par un procédé de flocage (décrit notamment dans le document de brevet publié sous la référence EP0691224A2). De même, la formation des ramifications avec des poils de ramification est faite en utilisant le même type de procédé de flocage. Il est possible d'utiliser des masques concentrant la mise en place des poils porteurs et de ramification sur les parties de la bande de roulement déterminées. Selon le procédé connu de flocage, après avoir enduit de colle la surface destinée à recevoir les poils porteurs, on procède à un dépôt électrostatique des poils de ramification en soumettant les poils et la bande de roulement à un champ électrique créant une différence de potentiel élevée et de l'ordre de 10kV. Cette même opération est répétée pour mettre en place les poils de ramification.

On distingue deux réalisations différentes qui présentent pour le problème traité le même avantage. À savoir une mise en place de poils de ramification pour rallonger les poils porteurs ou une mise en place selon laquelle chaque poil porteur est pourvu d'un grand nombre de poils de ramification dans le but de créer une forte densité en volume de poils de ramification. Dans le premier mode (rallongement des poils porteurs) on obtient également une forte densité de poils dans la rainure car les poils étant rallongés, ils sont susceptibles de fléchir et se plier pour occuper un volume plus important.

Par ce procédé, il est possible de mettre en place dans une cavité sur la bande de roulement une plus grande longueur de poils en prolongeant les poils porteurs par des poils de même nature ou non.

Le procédé qui vient d'être décrit permet de manière efficace de mettre en place sur la surface d'une cavité d'un corps quelconque (et notamment un pneu) une pluralité de fibres pour occuper une densité volumique élevée. Dans ce but, le procédé selon l'invention comprend les étapes suivantes :
- enduction de la surface destinée à recevoir des poils avec une colle appropriée ;
- dépôt électrostatique des poils porteurs sur ladite surface en soumettant la bande de roulement à un champ électrique créant une différence de potentiel élevée ;
- enduction des poils porteurs avec une colle pour la fixation des poils de ramification ;
- dépôt électrostatique des poils de ramification en soumettant les poils et la bande de roulement à un champ électrique créant une différence de potentiel élevée.
Cette dernière opération pouvant être répétée autant de fois que nécessaire.

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 montre en coupe une rainure dont le fond est pourvu d'une pluralité de poils porteurs rallongés par des poils de ramification ;

La figure 2 montre une deuxième variante de rainure pourvue d'une pluralité de poils porteurs sur lesquels sont greffés une pluralité de poils de ramification ;

La figure 3 montre en coupe une rainure dont les parois latérales sont pourvues d'une pluralité de poils portant des ramifications multiples ;

La figure 4 montre la mise en oeuvre du procédé de flocage permettant de lier des poils de ramification aux poils porteurs afin de rallonger les poils porteurs ;

La figure 5 montre la mise en oeuvre du procédé de flocage selon lequel on combine à un poil porteur une pluralité de poils de ramification.

### Description des figures

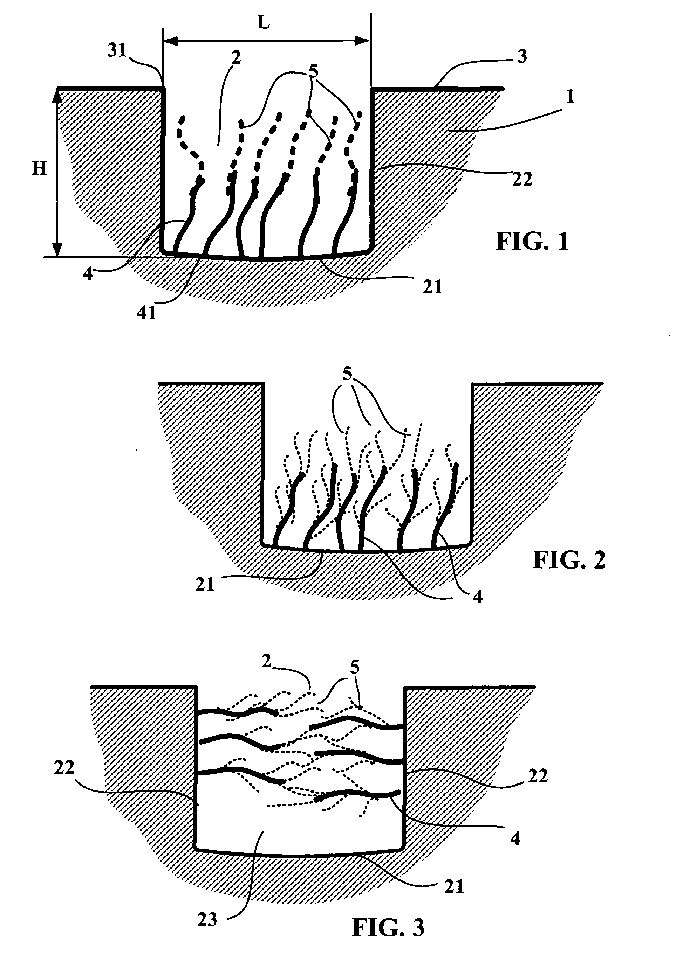

La figure 1 montre une coupe transversale d'une rainure 2 formée dans une bande de roulement 1 d'un pneu. Cette rainure 2 comprend une paroi de fond 21 prolongée par des parois latérales 22 qui coupent une surface de roulement 3 de la bande selon des arêtes 31. Cette rainure 2 a une profondeur H et une largeur L.

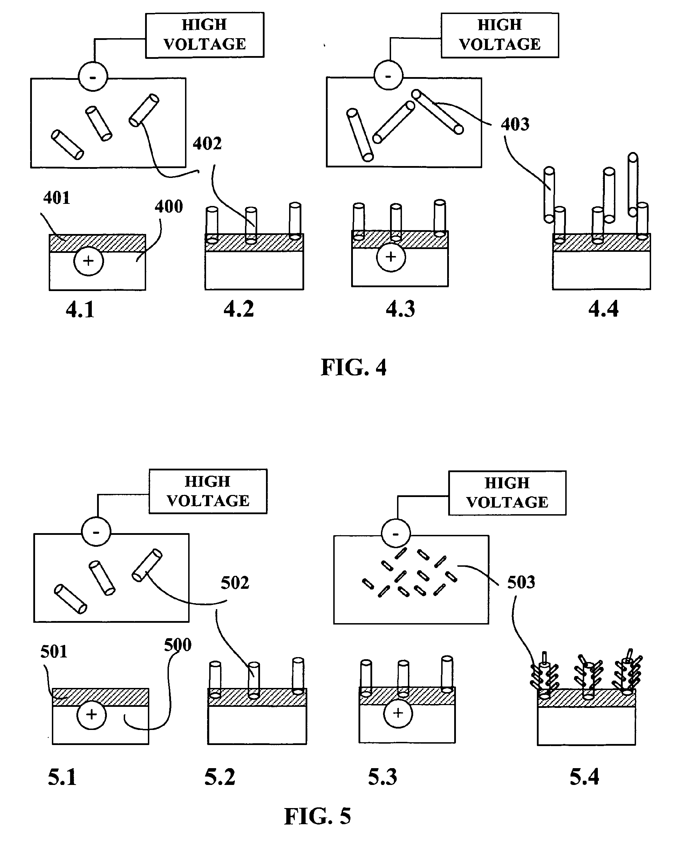

Dans cette première variante de l'invention, la paroi de fond 21 de la rainure 2 est pourvue d'une pluralité de poils porteurs 4 dont une extrémité 41 est fixée à ladite paroi 21. Ces poils porteurs 4 sont en nylon et ont une longueur maximale (3 mm) égale à 40 % de la profondeur H égale dans le cas présent à 7.5mm. Ces poils porteurs 4 sont fixés sur la paroi de fond 21 par un procédé de flocage que l'on peut décrire de la manière suivante : après dépôt d'une composition de colle sur la paroi de fond de la rainure, on soumet la colle dans la rainure et les poils ou fibres à un champ électrique générant une forte différence de potentiel électrique entre les poils porteurs ou fibres en général et la paroi de fond. De cette manière, on accroche des poils porteurs à une paroi selon une densité appropriée. Ensuite, une opération semblable est réalisée entre les poils porteurs et des poils de ramification qui sont choisis identiques aux poils porteurs. Dans cette dernière opération et avant application du champ électrique, on pulvérise sur les poils porteurs une composition collante pour les poils de ramification. Comme décrit plus haut, il est alors possible de rallonger les poils porteurs avec notamment des poils identiques (comme le montre la figure 4). La longueur moyenne des poils porteurs et de ramification est ici de 3 mm. Cette dernière opération pourrait être renouvelée pour prolonger les poils de ramification de manière à occuper en grande partie toute la profondeur de la rainure. La densité des poils porteurs qui est ici de 30 poils par unité de surface exprimée en millimètres carrés (mm²). Cette densité est préférentiellement comprise entre 2 à 50 poils par mm².

Les poils de ramification 5 sont dans le cas présent des poils de même dimension et de même nature que les poils porteurs 4, c'est-à-dire des poils en nylon. Ces poils de ramification 5 ont une section sensiblement circulaire de diamètre égal à 42 microns (préférentiellement compris entre 20 à 80 microns).

Dans une deuxième variante montrée avec la figure 2, après fixation des poils porteurs 4 à l'identique de la première variante, on réalise le collage d'une pluralité de poils de ramification 5 sur chaque poil porteur 4 ; dans ce cas, on utilise préférentiellement des poils de ramification 5 de plus petite section transversale et de plus petite longueur comparativement aux dimensions des poils porteurs. Dans l'exemple présenté, les poils de ramification 5 sont en nylon et ont une longueur moyenne de l'ordre de 0.8 mm. Le procédé de dépose est montré à la figure 5. Dans cette variante, la densité des poils porteurs est préférentiellement choisie de 2 a 15 poils par unité de surface (mm²) afin de permettre une ramification efficace, c'est-à-dire obtenir un taux d'occupation volumique important par les poils de ramification. Ce taux d'occupation volumique est obtenu par un nombre de ramifications au moins égal à 5 par poil porteur.

En moyenne chaque poil porteur porte de 5 à 15 poils de ramification afin d'atteindre un taux d'occupation du volume de la rainure qui soit optimal et donc le plus élevé possible. L'opération de pulvérisation de colle et ensuite de formation de ramification peut être renouvelée après avoir mis en place une première série de poils de ramification : dans ce cas, les nouveaux poils de ramification sont branchés sur des poils porteurs et sur des poils de ramification déjà en place.

Bien entendu, il est possible de combiner la première variante (figure 1) avec la deuxième variante (figure 2) en greffant sur les poils porteurs rallongés de la première variante des poils de ramification comme montré avec la deuxième variante.

Dans une variante non montrée, une pluralité de poils porteurs ont leurs deux extrémités collées à la paroi de fond de la rainure ; ceci permet un meilleur ancrage de l'ensemble des poils porteurs et des poils de ramification notamment sous l'action de l'écoulement des liquides (lors d'un roulage par temps de pluie par exemple).

Préférentiellement, les poils porteurs sont choisis avec les dimensions suivantes : une longueur comprise entre 0.3 et 5 mm (pour une rainure de profondeur moyenne allant de 7 à 8 mm), et un diamètre compris entre 20 et 80 microns. Il est important que les poils porteurs combinés avec les poils de ramification aient des rigidités de flexion appropriées afin de ne pas trop gêner l'écoulement de liquide dans les rainures en cas de roulage sur sol recouvert d'eau.

Afin d'obtenir un effet sensible sur la performance pour des pneus de véhicule tourisme (dimension moyenne des rainures : profondeur de rainure H allant de 7 à 8 mm et largeur L de 6 à 7 mm), il est préconisé de former au moins une et au plus dix ramifications sur chaque poil porteur. Plus la densité surfacique de poils porteurs est élevée et moins il est nécessaire de faire de ramifications (une seule peut être suffisante) ; au contraire, une occupation volumique élevée de la rainure par des poils peut être atteinte avec une densité surfacique faible en poils porteurs combinée à un grand nombre de ramifications (au moins supérieur à 5).

Sur la figure 3, on montre une variante de rainure d'une bande de roulement selon l'invention. Dans cette variante, ce sont les parois latérales 22 de la rainure 2 qui sont pourvues avec une pluralité de poils porteurs 4 fixés auxdites parois et sur lesquels sont greffés par collage une pluralité de poils de ramification 5. Dans cette variante, il est possible de laisser un passage 23 sans quasiment aucun poils ou à tout le moins une densité réduite de poils au voisinage du fond de la rainure. Ainsi quand la bande de roulement est en partie usée, les rainures présentant des profondeurs réduites en conséquence, ne sont quasiment pas obstruées par des poils maintenant ainsi une fonction drainage suffisante.

Dans un mode de réalisation, non montré, d'une bande de roulement selon l'invention les poils porteurs sont disposés avec une densité appropriée pour permettre la fixation de poils de ramification au plus près des extrémités des poils porteurs fixées sur la paroi de la cavité.

Sur la figure 4, on montre la mise en oeuvre du procédé de flocage selon lequel les poils porteurs 402 ayant un diamètre allant de 20 à 80 microns et une longueur moyenne allant de 3 à 5 mm (bornes incluses) sont prolongés par un poil de ramification 403 de caractéristiques dimensionnelles identiques à celle des poils porteurs. Dans un premier temps, un corps 400 est recouvert sur une surface avec une colle 401 pour la fixation de poils. Des poils porteurs 402 sont soumis à une forte charge électrique négative tandis que le corps 400 et la colle 401 sont soumis à une forte charge électrique positive (fig. 4.1). Sous l'action de ces charges, les poils porteurs 402 sont libérés et projetés sur la surface encollée du corps 400 (fig. 4.2). La densité des poils porteurs 402 est comprise entre 2 et 50 poils par millimètre au carré de surface du corps 400 (bornes incluses). Dans une seconde étape (fig. 4.3), des fibres de ramification 403 sont projetées sur les fibres porteuses en place sur le corps 400 en soumettant ces fibres de ramification à une forte charge électrique négative tandis que le corps 400, la colle 401 et les fibres porteuses 402 sont soumis à une forte charge électrique positive. La figure 4.4 montre la surface du corps 400 recouverte de poils porteurs 402 prolongés par des poils de ramification 403. La colle 401 employée pour le collage des poils porteurs 402 et des poils de ramification 403 est une résine de type époxy ou préférentiellement une colle soluble à l'eau pour atténuer l'augmentation de rigidité liée au collage des poils de ramification 403 sur les poils porteurs 402.

Dans une autre variante de réalisation montrée à la figure 5, on emploie les mêmes poils porteurs 502 que ceux utilisés pour la description de la variante montrée avec la figure 4. On voit dans une première étape (figs. 5.1 et 5.2) la même mise en place de poils porteurs 402 sur une surface encollée 501 d'un corps 500. Dans une seconde étape (fig. 5.3) on charge négativement un ensemble de fibres de ramification 503 de dimensions réduites par rapport à celles des poils porteurs. Grâce à cette opération, on peut fixer sur chaque poil porteur 502 une pluralité de poils de ramification 503 comme le montre la figure 5.4. La densité des poils porteurs 502 est ici préférentiellement comprise entre 2 à 15 poils par millimètre au carré (bornes incluses). Les poils de ramification 503 ont une longueur allant de 0.2 à 1 mm et un diamètre de 10 a 30 microns.

L'invention n'est pas limitée aux exemples décrits et représentés et diverses modifications peuvent y être apportées sans sortir de son cadre.

Il est notamment possible d'utiliser des poils en matériau caoutchouc ayant un diamètre allant de 0.1 à 0.4 mm de diamètre pour une longueur de 1 à 3 mm. Dans ce cas la densité surfacique est préférentiellement au moins égale à 2 et au plus égale à 20 poils par mm².

## Revendications

1. Bande de roulement (1) ayant une surface de roulement (3) sur laquelle débouche au moins une cavité (2), cette cavité étant limitée par une paroi de cavité (20) comprenant une paroi de fond (21) prolongée par une paroi latérale (22) coupant la surface de roulement pour former au moins une arête (31), cette bande étant, sur au moins une partie de la paroi de la cavité (2), pourvue d'une pluralité de poils porteurs (4), chaque poil porteur (4) comprenant deux extrémités dont une extrémité (41) est fixée à la paroi de cavité (20), cette bande étant **caractérisée en ce que** les poils porteurs (4) comprennent chacun au moins une ramification formée par la fixation d'au moins un poil de ramification (5).

2. Bande de roulement selon la revendication 1 **caractérisée en ce que** les poils porteurs fixés à la paroi de cavité sont uniquement fixés à la paroi de fond de la cavité.

3. Bande de roulement selon l'une des revendication 1 a 2 **caractérisée en ce que** les poils porteurs sont choisis dans le groupe constitué par les fibres de nylon, PET, acrylique, coton, lin, laine et rayonne.

4. Bande de roulement selon l'une des revendications 1 à 3 **caractérisée en ce que** les poils porteurs ont une longueur au moins égale à 0.3 mm et au plus égale à 5 mm, et un diamètre compris entre 20 et 80 microns.

5. Bande de roulement selon la revendication 4 **caractérisée en ce que** la densité des poils porteurs est au moins égale à 2 poils par mm² et au plus égale à 50 poils par mm².

6. Bande de roulement selon l'une des revendications 1 à 5 **caractérisée en ce que** les poils de ramification sont choisis dans le groupe constitué par les fibres de nylon, PET, acrylique, coton, lin, laine et rayonne.

7. Bande de roulement selon la revendication 6 **caractérisée en ce que** les poils de ramification ont une longueur comprise entre 0.2 et 3.2mm et un diamètre compris entre 20 et 80 microns.

8. Bande de roulement selon l'une des revendications 1 à 7 **caractérisée en ce que** les poils de ramification (5) ont un diamètre de petite section transversale inférieur au diamètre de la section transversale des poils porteurs (4) et ont une longueur inférieure à la longueur des poils porteurs.

9. Bande de roulement selon l'une des revendications 1 à 8 **caractérisée en ce que** les poils de ramification et les poils porteurs sont fixés par un procédé de "flocage".

10. Bande de roulement selon la revendication 1 **caractérisée en ce que** les poils porteurs sont fixés uniquement à la paroi latérale (22) de la cavité de manière à laisser un passage libre (23) de toute protubérance vers la paroi de fond (21) de la cavité.

## Claims

1. Tread (1) having a tread surface (3) onto which there opens at least one cavity (2), this cavity being bounded by a cavity wall (20) comprising a bottom wall (21) extended by a side wall (22) intersecting the tread surface to form at least one edge corner (31), this tread being, over at least part of the wall of the cavity (2), provided with a plurality of supporting strands (4), each supporting strand (4) comprising two ends of which one end (41) is attached to the cavity wall (20), this tread being **characterized in that** the supporting strands (4) each comprise at least one branching formed by the attachment of at least one branching strand (5).

2. Tread according to Claim 1, **characterized in that** the supporting strands attached to the cavity wall are attached only to the bottom wall of the cavity.

3. Tread according to one of Claims 1 to 2, **characterized in that** the supporting strands are chosen from the group consisting of nylon, PET, acrylic, cotton, flax, wool and rayon fibres.

4. Tread according to one of Claims 1 to 3, **characterized in that** the supporting strands have a length of at least 0.3 mm and at most 5 mm, and a diameter ranging between 20 and 80 microns.

5. Tread according to Claim 4 **characterized in that** the density of supporting strands is at least equal to 2 strands per mm² and at most equal to 50 strands per mm².

6. Tread according to one of Claims 1 to 5, **characterized in that** the branching strands are chosen from the group consisting of nylon, PET, acrylic, cotton, flax, wool and rayon fibres.

7. Tread according to Claim 6, **characterized in that** the branching strands have a length ranging between 0.2 and 3.2 mm and a diameter ranging between 20 and 80 microns.

8. Tread according to one of Claims 1 to 7 **characterized in that** the branching strands (5) have a diameter of small cross section smaller than the diameter of the cross section of the supporting strands (4) and have a length shorter than the length of the supporting strands.

9. Tread according to one of Claims 1 to 8, **characterized in that** the branching strands and the supporting strands are attached by a "flocking" process.

10. Tread according to Claim 1, **characterized in that** the supporting strands are attached only to the side wall (22) of the cavity so as to leave a passage (23) free of any protrusion towards the bottom wall (21) of the cavity.

## Patentansprüche

1. Laufstreifen (1) mit einer Lauffläche (3), an der mindestens ein Hohlraum (2) mündet, wobei dieser Hohlraum von einer Hohlraumwand (20) begrenzt wird, die eine Bodenwand (21) enthält, welche von einer die Lauffläche schneidenden Seitenwand (22) verlängert wird, um mindestens eine Kante (31) zu bilden, wobei dieser Streifen über mindestens einen Teil der Wand des Hohlraums (2) mit mehreren Trägerborsten (4) versehen ist, wobei jede Trägerborste (4) zwei Enden enthält, von denen ein Ende (41) an der Hohlraumwand (20) befestigt ist, wobei dieser Streifen **dadurch gekennzeichnet ist, dass** die Trägerborsten (4) je mindestens eine Verzweigung enthalten, die durch die Befestigung mindestens einer Verzweigungsborste (5) geformt wird.

2. Laufstreifen nach Anspruch 1, **dadurch gekennzeichnet, dass** die an der Hohlraumwand befestigten Trägerborsten nur an der Bodenwand des Hohlraums befestigt sind.

3. Laufstreifen nach einem der Ansprüche 1 bis 2, **dadurch gekennzeichnet, dass** die Trägerborsten aus der Gruppe ausgewählt werden, die aus den Nylon-, PET-, Acryl-, Baumwolle-, Flachs-, Wolle- und Rayonfasern besteht.

4. Laufstreifen nach einem der Ansprüche 1 bis 3, **dadurch gekennzeichnet, dass** die Trägerborsten eine Länge mindestens gleich 0,3 mm und höchstens gleich 5 mm und einen Durchmesser zwischen 20 und 80 Mikron haben.

5. Laufstreifen nach Anspruch 4, **dadurch gekennzeichnet, dass** die Dichte der Trägerborsten mindestens gleich 2 Borsten pro mm² und höchstens gleich 50 Borsten pro mm² ist.

6. Laufstreifen nach einem der Ansprüche 1 bis 5, **dadurch gekennzeichnet, dass** die Verzweigungsborsten aus der Gruppe ausgewählt werden, die aus den Nylon-, PET-, Acryl-, Baumwolle-, Flachs-, Wolle- und Rayonfasern besteht.

7. Laufstreifen nach Anspruch 6, **dadurch gekennzeichnet, dass** die Verzweigungsborsten eine Länge zwischen 0,2 und 3,2 mm und einen Durchmesser zwischen 20 und 80 Mikron haben.

8. Laufstreifen nach einem der Ansprüche 1 bis 7, **dadurch gekennzeichnet, dass** die Verzweigungsborsten (5) einen Durchmesser kleinen Querschnitts geringer als der Durchmesser des Querschnitts der Trägerborsten (4) und eine geringere Länge als die Länge der Trägerborsten haben.

9. Laufstreifen nach einem der Ansprüche 1 bis 8, **dadurch gekennzeichnet, dass** die Verzweigungsborsten und die Trägerborsten durch ein "Beflockungs"-Verfahren befestigt werden.

10. Laufstreifen nach Anspruch 1, **dadurch gekennzeichnet, dass** die Trägerborsten nur an der Seitenwand (22) des Hohlraums befestigt werden, um einen freien Durchgang (23) jeder Ausstülpung zur Bodenwand (21) des Hohlraums zu lassen.
